# EUROPÄISCHE PATENTSCHRIFT

(11) **EP 0 373 320 B1**
(45) Veröffentlichungstag und Bekanntmachung des Hinweises auf die Patenterteilung: **01.09.1993**
(21) Anmeldenummer: 89119144.7
(22) Anmeldetag: 13.10.1989
(51) Int. Cl.: B60R 25/06

(54) **Verriegelungsvorrichtung zwischen einem Zündschloss und einem Handwählhebel eines selbsttätig schaltenden Gangwechselgetriebes**
Locking device between an ignition lock and a selector lever of an automatic change speed gear box
Dispositif de blocage entre une serrure de contact et un levier de sélection d'une boîte de vitesse automatique

(30) Priorität: 16.12.1988 DE 3842332
(43) Veröffentlichungstag der Anmeldung: 20.06.1990
(73) Patentinhaber: DAIMLER-BENZ AKTIENGESELLSCHAFT, 70327 Stuttgart (DE)
(72) Erfinder: Mauz, Lothar, D-7300 Esslingen (DE); Gellner, Harald, D-7142 Marbach 3 (DE)

(56) Entgegenhaltungen:
- EP-A- 0 073 563
- EP-A- 0 334 672
- DE-A- 2 339 956
- DE-A- 3 616 122
- DE-C- 3 150 608
- GB-A- 2 160 485
- US-A- 4 724 722

## Beschreibung

Die Erfindung bezieht sich auf eine Verriegelungsvorrichtung nach dem Oberbegriff von Patentanspruch 1.

Bei einer bekannten Verriegelungsvorrichtung dieser Art (DE-A-34 25 189) ist ein zusätzlicher flacher Zwischenschieber verwendet, welcher in einer zur Drehachse des Zündschlosses senkrechten Ebene zwischen zwei Endstellungen verschiebbar im Lenkschloßgehäuse gelagert und durch den Sperrnocken des fluchtend und drehfest zum Zylinderschließkern angeordneten Nockenwellenteiles in die eine Endstellung betätigbar ist, wenn eine Öffnung des mit dem Gestänge verbundenen verschiebbaren Riegelelementes fluchtend zur Bewegungsbahn eines Sperrzapfens des Zwischenschiebers ausgerichtet ist. Letzteres ist in der Parkstellung des Handwählhebels der Fall, so daß dann der Sperrzapfen in die Öffnung eintreten und der Zwischenschieber die betreffende Endstellung einnehmen kann, in welcher das Nockenwellenteil in seine der Ruhestellung des Zündschlosses entsprechende Drehwinkelstellung gebracht und der Zündschlüssel abziehbar ist. Beim Wiederbetätigen des Zündschlosses in die Fahrtstellung wird der Zwischenschieber durch die federnden Mittel in die andere Endstellung betätigt, wobei er in eine Umfangsnut des Nockenwellenteiles eintritt und in der Endstellung am Nutgrund anliegt. In dieser Endstellung ist der Sperrzapfen des Zwischenschiebers aus der Öffnung des verschiebbaren Riegelelementes herausgetreten, so daß der Handwählhebel nunmehr aus der bisher durch den Sperrzapfen blockierten Parkstellung in seine anderen Wählstellungen betätigbar ist, in denen jedoch eine Betätigung des Zündschlüssels in die Ruhestellung blockiert ist, weil die Öffnung des verschiebbaren Riegelelementes nicht mehr in Überdeckung mit dem Sperrzapfen des Zwischenschiebers steht, so daß letzterer in seiner Endstellung am Nutgrund des Nockenwellenteiles im wesentlichen unverrückbar fixiert ist.

Bei dieser bekannten Verriegelungsvorrichtung besteht die Gefahr, daß durch einen Bruch des mechanischen Stellgestänges die Ruhestellung des Zündschlosses blockiert wird und somit der Zündschlüssel nicht mehr abziehbar und der Motor dadurch nicht stillsetzbar ist. Dies hat seine Ursache darin, daß vom Nockenwellenteil her - also durch den Zündschlüssel - keine Betätigung des mechanischen Stellgestänges möglich ist und der Zwischenschieber durch die einen federnden Mittel ständig im Sinne der Blockierung der Ruhestellung sowie das verschiebbare Riegelelement durch die anderen federnden Mittel im Sinne einer Blockierung des Zwischenschiebers betätigt sind.

Durch die EP-A-00 82 323 ist eine gattungsfremde Verriegelungsvorrichtung zwischen einem Zündschloß und einer Lenkwelle mit einem zweiteiligen längsverschiebbaren Sperriegel bekannt. Während der eine Sperriegelteil bolzenförmig ausgebildet und in eine korrespondierende Ausnehmung der Lenkwelle einrückbar ist, wird die Öffnung des anderen, als rahmenförmiger Schieber ausgebildeten Sperriegelteiles zwar von einem sowohl fluchtend als auch drehfest zum Schließzylinderkern des Zündschlosses angeordneten Nockenwellenteil durchsetzt. Dieses Nockenwellenteil arbeitet mit seinem Sperrnocken jedoch nicht direkt,sondern über einen zweiten rahmenförmigen Schieber auf den Sperriegel, der überdies noch durch nach Gehäuse abgestützte federnde Mittel in die die Lenkwelle blockierende Sperrstellung betätigbar ist.

Die der Erfindung zugrunde liegende Aufgabe besteht im wesentlichen darin, bei einer gattungsgemäßen Verriegelungsvorrichtung die Gefahr zu vermeiden, daß durch einen Bruch des mechanischen Stellgestänges die Ruhestellung des Zündschlosses blockiert werden kann.

Die erläuterte Aufgabe ist gemäß der Erfindung in vorteilhafter Weise mit den kennzeichnenden Merkmalen von Patentanspruch 1 gelöst.

Bei der Verriegelungsvorrichtung nach der Erfindung werden der Sperrnocken des Nockenwellenteiles und der zugehörige Gegensperrnocken des rahmenförmigen Schiebers durch die betreffenden federnden Mittel zwangsläufig außer Eingriff gebracht, wenn das mechanische Stellgestänge beispielsweise bei einem Unfall zu Bruch gehen sollte.

Bei der Verriegelungsvorrichtung nach der Erfindung ist in vorteilhafter Weise der bei der bekannten Verriegelungsvorrichtung erforderliche Zwischenschieber eingespart.

Bei der bekannten gattungsgemäßen Verriegelungsvorrichtung tritt der bolzenförmige Sperrnocken des Handwählhebels beim Erreichen der Parkstellung in ein gabelförmiges Gegensperrglied an dem schwenkbaren Riegelelement ein, welches durch eine nach Gehäuse abgestützte Drehfeder in die eine von zwei Endstellungen betätigbar ist. In dieser einen Endstellung ist das gabelförmige Gegensperrglied zu einer Rastenöffnung einer gehäusefesten Rastenplatte zur Verrastung der Wählhebelstellungen offen, so daß der zusätzlich als federnde Gegenraste verwendete Sperrnocken des Handwählhebels beim Verlassen der Parkstellung aus dem gabelförmigen Gegensperrglied austreten und in den nicht mit dem Gegensperrglied in Überdeckung stehenden Bereich der Rastenöffnung überwechseln kann. Beim Einlegen der Parkstellung wird das schwenkbare Riegelelement durch den Sperrnocken in seine andere Endstellung betätigt, in welcher das gabelförmige Gegensperrglied in Überdeckung mit der der Parkstellung zugehörigen Raste steht, gegenüber dem übrigen Teil der Rastenöffnung jedoch durch seinen einen Gabelarm abgeschlossen ist.

Bei dieser bekannten Verriegelungsvorrichtung besteht daher des weiteren die Gefahr, daß beispielsweise nach einem Bruch der Drehfeder das schwenkbare Riegelelement in die zuletzt beschriebene Endstellung verlagerbar ist, wenn sich der Handwählhebel nicht in der Parkstellung befindet. Unter diesen Umständen wäre das Einlegen der Parkstellung durch den besagten Gabelarm des Gegensperrgliedes blockiert.

Diese Gefahr ist bei der Verriegelungsvorrichtung nach der Erfindung durch die Ausgestaltung nach Patentanspruch 2 vermieden.

Die Patentansprüche 3 bis 6 haben vorteilhafte Ausgestaltungsmöglichkeiten der mit dem Zündschloß verbundenen Teile der Verriegelungsvorrichtung nach der Erfindung zum Gegenstand.

Einzelheiten und Vorteile der Erfindung ergeben sich aus der nachstehenden Beschreibung eines in der Zeichnung teilweise schematisch dargestellten Ausführungsbeispieles. In der Zeichnung bedeuten
- Figur 1: eine schematische Darstellung der kinematischen Zusammenhänge der Verriegelungsvorrichtung nach der Erfindung mit in der Neutralstellung stehendem Handwählhebel,
- Figur 2: eine schematische Darstellung der Verriegelungsvorrichtung von Figur 1 mit in der Parkstellung stehendem Handwählhebel,
- Figur 3: eine schematische Darstellung der Verriegelungsvorrichtung von Figur 1 mit in eine Fahrtstellung betätigtem Zündschloß,
- Figur 4: einen die Drehachse enthaltenden detaillierteren Längsschnitt durch das Zündschloß der Verriegelungsvorrichtung von Figur 1, bei dem jedoch im wesentlichen nur die für das Verständnis der Erfindung notwendigen Merkmale berücksichtigt sind,
- Figur 5: eine Stirnansicht des Zündschlosses der Verriegelungsvorrichtung von Figur 1 in Pfeilrichtung V von Figur 4 bei entferntem Schließzylinder,
- Figur 6: eine Ansicht des Zündschlosses der Verriegelungsvorrichtung von Figur 1 in Pfeilrichtung VI von Figur 4, bei welcher der Schließzylinder lediglich strichpunktiert angedeutet ist,und
- Figur 7: einen Querschnitt durch das Zündschloß der Verriegelungsvorrichtung von Figur 1 nach Linie VII-VII von Figur 6.

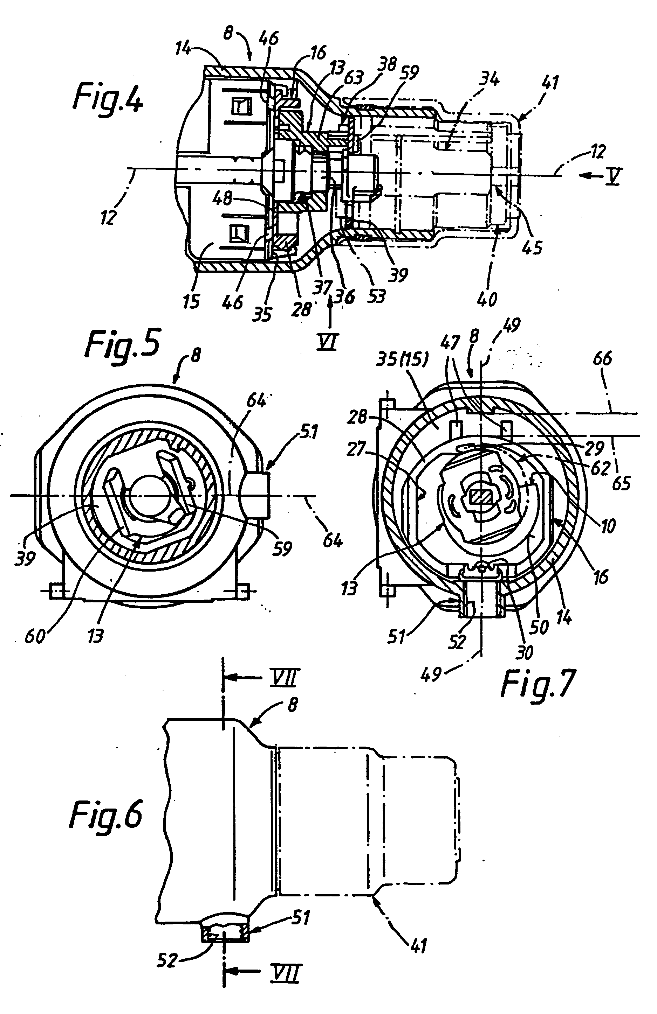

In dem weiten Gehäuseabschnitt eines im Durchmesser abgestuften, im wesentlichen zylindrisch ausgebildeten Zündschloßgehäuses14 eines Zündschlosses 8 ist ein Schaltergehäuse 15 bewegungsfest gehaltert (Fig. 4), in dem eine Schaltwalze 37 drehbar gelagert ist, deren eines Ende 36 aus dem dem engen Gehäuseabschnitt des Zündschloßgehäuses 14 zugekehrten Stirnende 35 des Schaltergehäuses 15 herausragt und mit einer zur Drehachse 12-12 des Zündschlosses 8 zentrischen Nabe 63 eines hülsenförmigen Nockenwellenteiles 13 bewegungsfest verbunden ist.

Wie mit strichpunktierten Linien in Fig. 4 angedeutet, ist in dem engen Gehäuseabschnitt des Zündschloßgehäuses 14 ein Schließzylinder 40 bewegungsfest gehaltert, welcher einen in Bezug auf die Drehachse 12-12 zentrisch und drehbar gelagerten Schließzylinderkern 34 mit einem Schlüsselkanal 45 aufweist, über den das Zündschloß 8 in der üblichen Weise mittels eines Zündschlüssels betätigbar ist.

Schaltwalze 37 und Nockenwellenteil 13 durchsetzen eine im Durchmesser abgestufte Öffnung 27 eines rahmenförmigen Schiebers 28 eines Riegelelementes 16, welches mittels je eines korrespondierenden Gleitschuhes 46 in zwei parallelen Führungsschlitzen 47 gleitend geführt ist, die in die Stirnfläche 35 des aus Kunststoff bestehenden Schaltergehäuses 15 eingearbeitet sind. Die Führungsschlitze 47 liegen symmetrisch zu einer die Drehachse 12-12 enthaltenden Gehäuseebene 49-49 des Zündschloßgehäuses 14.

Das Riegelelement 16 weist zu seiner Fixierung in den Richtungen der Drehachse 12-12 einen radial inneren Abschnitt 48 auf, welcher mit dem erforderlichen Bewegungsspiel zwischen das Stirnende 35 des Schaltergehäuse 15 einerseits und das Nockenwellenteil 13 andererseits eingreift.

Das Nockenwellenteil 13 ist an seinem Außenumfang mit einem Sperrnocken 10 und mit einem Steuernocken 50 versehen. In entsprechender Weise weist der Schieber 28 einen Gegensperrnocken 29 und einen Gegensteuernocken 30 auf, welche an den in der Gehäuseebene 49-49 sich gegenüberliegenden Stellen der Öffnung 27 vorgesehen sind und in der weiter unten beschriebenen Weise mit dem Sperrnocken 10 bzw. mit dem Steuernocken 50 zusammenarbeiten.

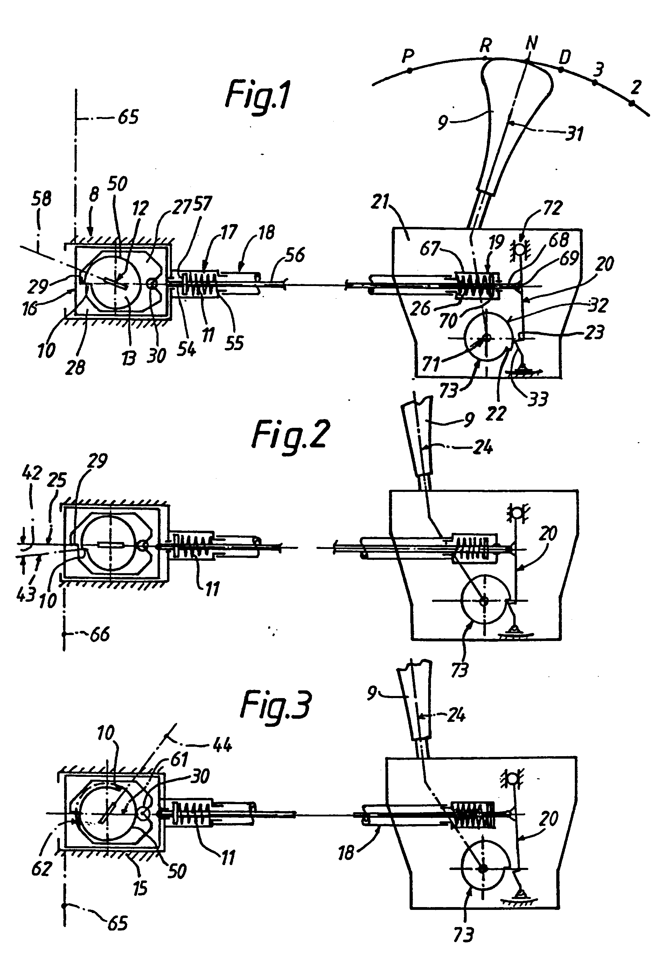

Das Zündschloßgehäuse 14 weist einen Anschlußstutzen 51 mit einer Durchgangsöffnung 52 für den Anschluß eines biegsamen Stellgestänges 18 (Figur 1 bis 3) zur Übertragung sowohl von Zug- als auch von Druckkräften auf. Die Durchgangsöffnung 52 - welche mit ihrer Achse 64-64 sowohl in der Gehäuseebene 49-49 als auch senkrecht zur Drehachse 12-12 liegt - wird von einem Stößel 54 verschiebbar durchsetzt, welcher zur Betätigung des Riegelelementes 16 verwendet ist und das eine Stangenende der zentralen Betätigungsstange 56 des Stellgestänge 18 selbst bildet oder fluchtend und bewegungsfest mit diesem Stangenende verbunden ist.

Das Stellgestänge 18 weist an seinem dem Stößel 54 zugehörigen Gestängeende 17 ein mit dem Anschlußstutzen 51 kuppelbares Anschlußstück 55 auf, in welchem eine zylindrische Druckfeder 11 angeordnet ist, die sich mit ihrem einen Federende nach Gehäuse und mit ihrem anderen Federende an einem Bund 57 des Stangenendes der Betätigungsstange 56 abstützt und auf diese Weise den Stößel 54 in Richtung des Schiebers 28 des Riegelelementes 16 betätigt.

Das Nockenwellenteil 13 ist durch eine Steckkupplung 38 mit dem Schließzylinderkern 34 kuppelbar, wobei die eine Kupplungshälfte durch zwei axiale quaderförmige Kupplungsmitnehmer 59 und 60 des Nockenwellenteiles 13 gebildet wird, zwischen welche zwei korrespondierende axiale quaderförmige Kupplungsmitnehmer 53 des Schließzylinderkernes 34 als zweite Kupplungshälfte formschlüssig und somit drehfest eingreifen. Während die letztgenannten Kupplungsmitnehmer 53 einteilig mit dem metallischen Schließzylinderkern ausgebildet sind, werden die aus einem Kunststoff bestehenden Kupplungsmitnehmer 59 und 60 durch eine auf das Nockenwellenteil 13 im Preßsitz aufgesteckte metallische Mitnehmerplatte 39 verstärkt.

Das Riegelelement 16 ist einerseits durch den Steuernocken 50 des Nockenwellenteiles 13 in die in den Figuren 1, 3 und 7 gezeichnete Endstellung 65 - in welcher der Gegensperrnocken 29 des Schiebers 28 in der Bewegungsbahn 62 des Sperrnockens 10 liegt - und andererseits durch den Stößel 54 in die in Figur 2 gezeichnete Endstellung 66 betätigbar, in welcher der Gegensperrnocken 29 nicht in der Bewegungsbahn 62 des Sperrnockens 10 liegt.

Der Zylinderschließkern 34 und mit diesem das Nockenwellenteil 13 sind durch den Zündschlüssel in eine Ruhestellung 25 (Figur 2) betätigbar, in welcher einerseits der Zündschlüssel abziehbar ist und andererseits der Sperrnocken 10 des Nockenwellenteiles 13 gegenüber dem Gegensperrnocken 29 um einen Differenzdrehwinkel 42 (Drehwinkelstellung 43) versetzt liegt.

Zylinderschließkern 34 und Nockenwellenteil 13 sind durch den Zündschlüssel in eine Fahrtstellung 44 (Figur 3) betätigbar, in welcher der Schieber 28 durch den Eingriff von Steuernocken 50 (Drehwinkelstellung 61) und Gegensteuernocken 30 in die Endstellung 65 betätigt ist.

Wenn sich der Schieber 28 in der Endstellung 65 gemäß Figur 1 befindet, gelangt das Nockenwellenteil 13 beim Betätigen des Schließzylinderkernes 34 durch den Zündschlüssel in Richtung der Ruhestellung 25 in eine Sperrstellung 58,in welcher eine Weiterbetätigung durch die Anlage des Sperrnockens 10 am Gegensperrnocken 29 blockiert ist.

An einem in Nähe des Fahrersitzes liegenden fahrzeugfesten Gehäuseteil 21 ist in der üblichen Weise ein Handwählhebel 9 eines selbsttätig schaltenden Gangwechselgetriebes um eine Schwenkachse 71 schwenkbar gelagert und dadurch in die einzelnen Wählstellen, also u. a. auch in eine Parkstellung 24(Figur 2 und 3) und in eine Neutralstellung 31 (Figur 1) betätigbar. An einer in Nähe des Handwählhebels 9 am Gehäuseteil 21 befestigten Lageranordnung 72 ist ein weiteres Riegelelement 20 schwenkbar aufgehängt, an welchem mittels einer Gelenkverbindung 69 das andere Stangenende 68 der Betätigungsstange 56 des Stellgestänges 18 angelenkt ist. Das Stellgestänge 18 weist an seinem dem Stangenende 68 zugehörigen Gestängeende 19 ein vom Stangenende 68 verschiebbar durchsetztes Endstück 67 auf, welches am Gehäuseteil 21 befestigt ist und eine zylindrische Druckfeder 26 aufnimmt. Die Druckfeder 26 - welche mit geringeren Federkräften ausgelegt ist als die Druckfeder 11 - stützt sich mit ihrem einen Federende nach Gehäuse und mit ihrem anderen Federende so an einem Bund 70 der Betätigungsstange 56 ab, daß das Riegelelement 20 durch die betreffende Federkraft in dem von der Schwenkachse 71 weg gerichteten Schwenksinne betätigt wird.

Eine um die Schwenkachse 71 drehbar angeordnete Nockenscheibe 73 ist mit dem Handwählhebel 9 fest verbunden und mit einem Sperrnocken 22 sowie mit einem Steuernocken 32 versehen. In entsprechender Weise ist das schwenkbare Riegelelement 20 mit einem Gegensperrnocken 23 sowie mit einem Gegensteuernocken 33 versehen.

Die stärkere Druckfeder 11 sucht das Riegelelement 20 und die Nockenscheibe 73 in gegenseitiger Anlage zu halten.

Die gegenseitige Zuordnung der Nocken des Handwählhebels 9 einerseits zu den Nocken des Riegelelementes 20 andererseits ist so getroffen, daß Steuernocken 32 und Gegensteuernocken 33 in allen Stellungen - mit Ausnahme der Parkstellung 24 - des Handwählhebels 9 in gegenseitigem Eingriff stehen, wodurch die Federkraft der Druckfeder 11 über das Stellgestänge 18 und den Bund 27 von dem Steuernocken 32 abgefangen und der Stößel 54 in die der Endstellung 65 des Schiebers 28 zugehörige Stellung zurückgezogen ist, während Sperrnocken 22 und Gegensperrnocken 23 ausschließlich in der Parkstellung 24 des Handwählhebels 9 entweder in gegenseitigen Eingriff bringbar (wenn das Zündschloß 8 in die Ruhestellung 25 betätigt wird, Figur 2), oder außer Eingriff bringbar sind (wenn das Zündschloß 8 aus der Ruhestellung 25 in Richtung der Fahrtstellung 44 betätigt wird, Figur 3).

### Arbeitsweise:

Bei abgestelltem Fahrzeug und abgezogenem Zündschlüssel befindet sich die Verriegelungsvorrichtung in der Stellung von Figur 2, in welcher der Handwählhebel 9 in der Parkstellung 24 durch Riegelelement 20 und Nockenscheibe 73 verriegelt ist.

Beim Anlassen des Antriebsmotores wird das Zündschloß 8 - ausgehend von der Verriegelungsstellung von Figur 2 - in Richtung Fahrtstellung 44 betätigt, wobei der Steuernocken 50 des Nockenwellenteiles 13 den Schieber 28 in die Endstellung 65 betätigt, wodurch das Stellgestänge 18 das Riegelelement 20 zunächst in eine Lösestellung (Figur 3) gegenüber der Nockenscheibe 73 betätigt, in welcher der Handwählhebel 9 zur Betätigung in eine der anderen Wählstellungen freigegeben ist.

Vor dem Abstellen des Antriebsmotores befindet sich die Verriegelungsvorrichtung zunächst in der Stellung von Figur 1, in welcher der Handwählhebel 9 noch nicht in seiner Parkstellung 24 steht und dadurch der Abzug des Zündschlüssels nicht möglich ist, weil die Ruhestellung 25 durch den Eingriff von Sperr- und Gegensperrnocken 10 und 29 blockiert ist.

Durch Einlegen der Parkstellung 24 kommen Steuernocken 32 und Gegensteuernocken 33 am Handwählhebel außer Eingriff, wodurch die Druckfeder 11 freigegeben wird und den Schieber 28 in die Endstellung 66 betätigt, in welcher der Gegensperrnocken 29 nicht mehr in der Bewegungsbahn 62 (Kreisbahn um die Drehachse 12-12) des Sperrnockens 10 steht, so daß das Zündschloß 8 in die Ruhestellung 25 betätigbar ist.

## Patentansprüche

1. Verriegelungsvorrichtung zwischen einem Zündschloß (8) und einem Handwählhebel (9) eines selbsttätig schaltenden Gangwechselgetriebes, bei der ein Sperrnocken (10) eines über den korrespondierenden Zündschlüssel entgegen federnden Mitteln (11) betätigbaren und zur Drehachse (12) des Zündschlosses sowohl fluchtend als auch drehbar gelagerten Nockenwellenteiles (13) mit einem an einem zum Zündschloßgehäuse (14) bewegungsfesten Gehäuseteil verschiebbar angeordneten Riegelelement (16) zusammenarbeitet, welches mit einem Gestängeende (17) eines mechanischen Stellgestänges (18) kinematisch verbunden ist, dessen anderes Gestängeende (19) mit einem weiteren Riegelelement (20) kinematisch verbunden ist, welches sowohl in der Nähe des Handwählhebels (9) an einem fahrzeugfesten Gehäuseteil (21) schwenkbar gelagert ist als auch mit einem die Wählbewegungen mitausführenden Sperrnocken (22) des Handwählhebels (9) über korrespondierende Gegensperrmittel (23) zusammenarbeitet, und bei der der Handwählhebel (9) in eine Parkstellung (P) betätigbar ist und das Zündschloß (8) ausschließlich eine festgelegte Drehwinkelstellung aufweist, in welcher der Zündschlüssel mit dem Zündschloß (8) in bzw. außer Eingriff bringbar ist, und bei der die gegenseitige Zuordnung von Sperrnocken (10, 22) und Riegelelementen (16, 20) so getroffen ist, daß sowohl das Zündschloß (8) ausschließlich in der Parkstellung (P) des Handwählhebels (9) in die Ruhestellung bringbar als auch der Handwählhebel (9) in der Ruhestellung des Zündschlosses (8) zwangsläufig in seiner Parkstellung (P) verriegelt ist, und bei der der Sperrnocken (22) des Handwählhebels (9) gegenüber den Gegensperrmitteln (23) des zugehörigen schwenkbaren Riegelelementes (20) entkoppelt ist, wenn der Handwählhebel (9) nicht in der Parkstellung (P) steht, und bei der nach dem Gehäuse (21) sich abstützende federnde Mittel (26) im Sinne einer Entkoppelung auf das schwenkbare Riegelelement (20) einwirken,
**dadurch gekennzeichnet,**
daß das Nockenwellenteil (13) mit seiner Drehachse (12-12) die Öffnung (27) eines rahmenförmigen Schiebers (28) des verschiebbaren Riegelelementes (16) durchsetzt und einen zusätzlichen Steuernocken (50) aufweist sowie über seinen Sperrnocken (10) mit einem Gegensperrnocken (29) und mit seinem Steuernocken (50) mit einem Gegensteuernocken (30) in Eingriff bringbar ist sowie Gegensperrnocken (29) und Gegensteuernocken (30) an in Bezug auf das Nockenwellenteil (13) diametral sich gegenüberliegenden Stellen des Schiebers (28), sich jeweils radial zur Drehachse (12-12) des Nockenwellenteiles (13) erstreckend, so angeordnet sind, daß der Gegensperrnocken (29) sowohl um einen Differenzdrehwinkel (42) vor der der Ruhestellung (25) entsprechenden Drehwinkelstellung (43) des Sperrnockens (10) des Nockenwellenteiles (13) liegt als auch durch die der Betätigung durch den Zündschlüssel entgegenwirkenden federnden Mittel (11) gegenüber dem Sperrnocken (10) des Nockenwellenteiles (13) außer Eingriff bringbar ist, und daß die der Betätigung des Nockenwellenteiles (13) durch den Zündschlüssel entgegenwirkenden federnden Mittel (11) mit höheren Federkräften ausgelegt sind als die auf das schwenkbare Riegelelement (20) im Sinne einer Entkoppelung von dem Sperrnocken (22) des Handwählhebels (9) einwirkenden federnden Mittel (26), und daß der Steuernocken (50) des Nockenwellenteiles (13) beim Betätigen in die der Fahrtstellung (44) des Zündschlosses (8) entsprechende Drehwinkelstellung (61) mit dem Gegensteuernocken (30) so in Eingriff gelangt, daß sowohl der Gegensperrnocken (29) des Schiebers (28) in der Bewegungsbahn (62) des Sperrnockens (10) des Nockenwellenteiles (13) liegt als auch das schwenkbare Riegelelement (20) von dem Sperrnocken (22) des Handwählhebels (9) entkoppelt ist.

2. Verriegelungsvorrichtung nach Anspruch 1,
**dadurch gekennzeichnet,**
daß dem Handwählhebel (9) ein Steuernocken (32) und dem schwenkbaren Riegelelement (20) ein korrespondierender Gegensteuernocken (33) so zugeordnet sind, daß durch einen Nockeneingriff in den nicht der Parkstellung (24) entsprechenden wählstellungen (bspw. Neutralstellung 31) des Handwählhebels (9) eine Betätigung des Gegensperrnockens (29) des Schiebers (28) durch das Stellgestänge (18) in eine nicht in der Bewegungsbahn (62) des Sperrnockens (10) des Nockenwellenteiles (13) liegende Stellung verhindert ist.

3. Verriegelungsvorrichtung nach Anspruch 1 oder 2,
**dadurch gekennzeichnet,**
daß der rahmenförmige Schieber (28) an einem dem Schließzylinderkern (34) benachbarten Stirnende (35) eines im Zündschloßgehäuse (14) bewegungsfest gehalterten zylindrischen Schaltergehäuses (15) verschiebbar gehaltert ist.

4. Verriegelungsvorrichtung nach einem der Patentansprüche 1 bis 3,
**dadurch gekennzeichnet,**
daß das Nockenwellenteil (13) eine zur Drehachse (12-12) des Zündschlosses (8) zentrische Nabe (63) aufweist, welche drehfest auf einem aus dem Schaltergehäuse (15) herausragenden Ende (36) einer im Schaltergehäuse (15) drehbar gelagerten Schaltwalze (37) sitzt.

5. Verriegelungsvorrichtung nach einem der Ansprüche 1 bis 4,
**dadurch gekennzeichnet,**
daß das Nockenwellenteil (13) durch eine Steckkupplung (38) mit dem Schließzylinderkern (34) in Verbindung bringbar ist.

6. Verriegelungsvorrichtung nach einem der Ansprüche 1 bis 5,
**dadurch gekennzeichnet,**
daß das Nockenwellenteil (13) aus Kunststoff besteht und an seinem dem Schließzylinderkern (34) zugekehrten Stirnende mit einer metallischen Mitnehmerplatte (39) verstärkt ist.

## Claims

1. Interlock device between an ignition lock (8) and a manual selector lever (9) of an automatic gear-change transmission, in which a detent cam (10) of a camshaft part (13) actuable counter to resilient means (11) via the corresponding ignition key and mounted both in alignment with and rotatably relative to the axis of rotation (12) of the ignition lock interacts with a latch element (16) which is arranged displaceably on a housing part fixed in terms of movement relative to the ignition-lock housing (14) and which is connected kinematically to a rod end (17) of a mechanical adjusting linkage (18), the other rod end (19) of which is connected kinematically to a further latch element (20) both mounted pivotably on a housing part (21) fixed to the vehicle, in the vicinity of the manual selector lever (9), and interacting with a detent cam (22), jointly executing the selection movements, of the manual selector lever (9) via corresponding counterdetent means (23) and in which the manual selector lever (9) is actuable into a parking position (P) and the ignition lock (8) has only one set rotary angle position, where the ignition key can be brought into and out of engagement with the ignition lock (8), and in which the mutual relationship of the detent cams (10, 22) and latch elements (16, 20) is such that only in the parking position (P) of the manual selector lever (9) can the ignition lock (8) be brought into the position of rest and in the position of rest of the ignition lock (8) the manual selector lever (9) is necessarily locked in its parking position (P), and in which the detent cam (22) of the manual selector lever (9) is uncoupled from the counterdetent means (23) of the associated pivotable latch element (20) when the manual selector lever (9) is not in the parking position (P), and in which resilient means (26) supported relative to the housing (24) act with an uncoupling effect on the pivotable latch element (20), characterised in that the camshaft part (13) passes with its axis of rotation (12-12) through the orifice (27) of a frame-shaped slide (28) of the displaceable latch element (16), has an additional control cam (50) and can be brought into engagement via its detent cam (10) with a counterdetent cam (29) and via its control cam (50) with a counter control cam (30), and the counterdetent cam (29) and counter control cam (30) are arranged, each extending radially relative to the axis of rotation (12-12) of the camshaft part (13), at points of the slide (28) located diammetrically opposite one another in relation to the camshaft part (13), in such a way that the counterdetent cam (29) both is located at a differential angle of rotation (42) in front of the rotary angle position (43), corresponding to the position of rest (25), of the detent cam (10) of the camshaft part (13) and can be brought out of engagement with the detent cam (10) of the camshaft part (13) by the resilient means (11) counteracting the actuation by the ignition key, and in that the resilient means (11) counteracting the actuation of the camshaft part (13) by the ignition key are designed with higher spring forces than resilient means (26) acting on the pivotable latch element (20) with the effect of an uncoupling from the detent cam (22) of the manual selector lever (9), and in that, during actuation into the rotary angle position (61) corresponding to the driving position (44) of the ignition lock (8), the control cam (50) of the camshaft part (13) comes into engagement with the counter control cam (30), in such a way that both the counterdetent cam (29) of the slide (28) is located in the path of movement (62) of the detent cam (10) of the camshaft part (13) and the pivotable latch element (20) is uncoupled from the detent cam (22) of the manual selector lever (9).

2. Interlock device according to Claim 1, characterised in that a control cam (32) is assigned to the manual selector lever (9) and a corresponding counter control cam (33) is assigned to the pivotable latch element (20), in such a way that a cam engagement in the selection positions (for example, neutral position 31) of the manual selector lever (9) which do not correspond to the parking position (24) prevents an actuation of the counterdetent cam (29) of the slide (28) by the adjusting linkage (18) into a position not located in the path of movement (62) of the detent cam (10) of the camshaft part (13).

3. Interlock device according to Claim 1 or 2, characterised in that the frame-shaped slide (28) is mounted displaceably on an end face (35), adjacent to the lock-cylinder core (34), of a cylindrical switch housing (15) mounted fixably in terms of movement in the ignition-lock housing (14).

4. Interlock device according to one of Claims 1 to 3, characterised in that the camshaft part (13) has a hub (63) which is central relative to the axis of rotation (12-12) of the ignition lock (8) and which rests fixedly in terms of rotation on an end (36), projecting from the switch housing (15), of a controller (37) mounted rotatably in the switch housing (15).

5. Interlock device according to one of Claims 1 to 4, characterised in that the camshaft part (13) can be connected to the lock-cylinder core (34) by means of a plug coupling (38).

6. Interlock device according to one of Claims 1 to 5, characterised in that the camshaft part (13) consists of plastic and on its end face confronting the lock-cylinder core (34) is reinforced with a metal driving plate (39).

## Revendications

1. Dispositif de verrouillage entre une serrure de contact (8) et un levier de sélection (9) d'une boîte de vitesses automatique, dans lequel une came d'arrêt (10) d'une partie d'arbre à cames (13), pouvant être actionnée par l'intermédiaire de la clé de contact correspondante en opposition à des moyens élastiques (11) et montée aussi bien en coïncidence que de façon tournante par rapport à l'axe de rotation (12) de la serrure de contact, coopère avec un élément de verrouillage (16) disposé de façon à pouvoir se déplacer en translation sur une partie de carter immobile par rapport au boîtier (14) de la serrure de contact et qui est relié cinématiquement à une extrémité (17) d'une tringlerie mécanique de manoeuvre (18), dont l'autre extrémité (19) est reliée cinématiquement avec un autre élément de verrouillage (20), qui est d'une part monté au voisinage du levier sélecteur (9) sur une partie de carter (21) solidaire du véhicule et qui coopère d'autre part avec une came d'arrêt (22) du levier sélecteur (9), effectuant avec lui les mouvements de sélection, par l'intermédiaire de moyens antagonistes d'arrêt (23) correspondants, et dans lequel le levier sélecteur (9) peut être actionné dans une position de stationnement (P) et la serrure de contact (8) comporte exclusivement une position angulaire fixe dans laquelle la clé de contact peut être amenée en accouplement avec la serrure de contact ou bien désaccouplée de celle-ci, et où l'association des cames d'arrêt (10, 22) et des éléments de verrouillage (16, 20) est conçue de telle sorte qu'aussi bien la serrure de contact (8) puisse être amenée dans la position de repos, exclusivement dans la position de stationnement (P) du levier sélecteur (9), qu'également le levier sélecteur (9) soit automtiquement verrouillé dans sa position de stationnement (P), dans la position de repos de la serrure de contact (8) et où la came d'arrêt (22) du levier sélecteur (9) est désaccouplée par rapport aux moyens antagonistes d'arrêt (23) de l'élément de verrouillage pivotant (20) associé quand le levier sélecteur (9) ne se trouve pas dans la position de stationnement (P), et où les moyens (26) s'appuyant élastiquement contre le carter (21) agissent dans le sens d'un désaccouplement sur l'élément de verrouillage pivotant (20), - caractérisé en ce que la partie d'arbre à cames (13) a son axe de rotation (12-12) qui traverse l'ouverture (27) d'un poussoir (28) en forme de châssis de l'élément de verrouillage (16) déplaçable en translation et comporte une came de commande additionnelle (50) et également peut être amenée en prise, par l'intermédiaire de sa came d'arrêt (10), avec une contre-came d'arrêt (29), et par sa came de commande (50) avec une contre-came de commande (30), en ce que la contre-came d'arrêt (29) et la contre-came de commande (30) étant situées, en s'étendant chacune radialement par rapport à l'axe de rotation (12-12) de la partie d'arbre à cames (13), dans des positions du poussoir (28) diamétralement opposées par rapport à la partie d'arbre à cames (13), de telle sorte que la contre-came d'arrêt (29) soit d'une part placée en avance d'un angle de rotation différentiel (42) par rapport à la position angulaire (43), correspondant à la position de repos (25), de la came d'arrêt (10) de la partie d'arbre à cames (13) et d'autre part puisse être amenée en désaccouplement de la came d'arrêt (10) de la partie d'arbre à cames (13) par les moyens élastiques (11) s'opposant à l'actionnement par la clé de contact, et en ce que les moyens élastiques (11), agissant en opposition à l'actionnement de la partie d'arbre à cames (13) par la clé de contact, sont conçus de façon à produire de plus grandes forces élastiques que les moyens élastiques (26) agissant sur l'élément de verrouillage pivotant (20) dans le sens d'un désaccouplement de la came d'arrêt (22) du levier sélecteur (9), et en ce que la came de commande (50) de la partie d'arbre à cames (13) entre en prise avec la contre-came de commande (30), lors d'un actionnement jusque dans la position angulaire (61) correspondant à la position de marche (44) de la serrure de contact (8) de telle sorte qu'aussi bien la contre-came d'arrêt (29) du poussoir (28) soit amenée dans la voie de déplacement (62) de la came d'arrêt (10) de la partie d'arbre à cames (13) qu'également l'élément de verrouillage pivotant (20) soit désaccouplé de la came d'arrêt (22) du levier sélecteur (9).

2. Dispositif de verrouillage selon la revendication 1, caractérisé en ce que le levier sélecteur (9) est associé à une came de commande (32) et l'élément de verrouillage pivotant (20) est associé à une contre-came de commande correspondante (33) de telle sorte que, sous l'effet d'une entrée en prise des cames dans les positions de sélection, ne correspondant pas à la position de stationnement (24), (par exemple la position neutre 31) du levier sélecteur (9), un actionnement de la contre-came d'arrêt (29) du poussoir (28) par la tringlerie de manoeuvre (18) jusque dans une position non située dans la voie de déplacement (62) de la came d'arrêt (10) de la partie d'arbre à cames (13) soit empêché.

3. Dispositif de verrouillage selon la revendication 1 ou 2, caractérisé en ce que le poussoir (28) en forme de châssis est maintenu avec possibilité de translation sur une extrémité frontale (35), adjacente au noyau de cylindre de fermeture (34), d'un boîtier cylindrique de commutateur (15) maintenu en position fixe dans le boîtier (14) de la serrure de contact.

4. Dispositif de verrouillage selon une des revendications 1 à 3, caractérisé en ce que la partie d'arbre à cames (13) comporte un embout (63) centré par rapport à l'axe de rotation (12-12) de la serrure de contact (8) et qui est monté sans possibilité de rotation sur une extrémité (36), dépassant du boîtier de commutateur (15), d'un tambour de commutation (37) monté de façon tournante dans le boîtier de commutateur (15).

5. Dispositif de verrouillage selon une des revendications 1 à 4, caractérisé en ce que la partie d'arbre à cames (13) peut être amenée en liaison avec le noyau (34) du cylindre de fermeture par un accouplement enfichable (38).

6. Dispositif de verrouillage selon une des revendications 1 à 5, caractérisé en ce que la partie d'arbre à cames (13) est constituée de matière plastique et est renforcée, à son extrémité frontale dirigée vers le noyau de cylindre de fermeture (34), par une plaque métallique d'entraînement (39).
